# FASCICULE DE BREVET EUROPEEN

(11) **EP 1 030 127 B1**
(45) Date de publication et mention de la délivrance du brevet: **07.01.2004**
(21) Numéro de dépôt: 00400452.9
(22) Date de dépôt: 18.02.2000
(51) Int. Cl.: F24F 13/28, B01D 45/08

(54) **Dispositif anti-givrage pour filtre à air**
Vor Eisbildung schützende Vorrichtung für einen Luftfilter
Anti-frost device for an air filter

(30) Priorité: 19.02.1999 FR 9902110
(43) Date de publication de la demande: 23.08.2000
(73) Titulaire: Thales, 75008 Paris (FR)
(72) Inventeur: Belache, Areski, du Pres. S. Allende, 94117 Arcueil Cédex (FR); Grandidier, Alain, du Pres. S. Allende, 94117 Arcueil Cédex (FR); Pourrier, Pierre, du Pres. S. Allende, 94117 Arcueil Cédex (FR)
(74) Mandataire: Lucas, Laurent Jacques

(56) Documents cités:
- WO-A-98/32970
- GB-A- 2 201 357
- US-A- 4 897 095

## Description

Le domaine de l'invention concerne le domaine des dispositifs anti-givrage pour filtre à air. Les filtres à air sont généralement utiliser dans des systèmes de ventilation. Dans certaines conditions climatiques dites de « brouillard givrant », le problème du givrage devient particulièrement important. Le brouillard givrant correspond à un air à basse température, proche de 0°C, et avec un degré d'humidité élevé. Il se rencontre par exemple dans les sites d'altitude élevée et néanmoins situés en bord de mer. Dans ces conditions, lorsque de l'air traverse un filtre à air, il se produit un phénomène de détente qui se traduit par une légère baisse de température de l'air, avec pour conséquence la formation de givre sur le filtre. Un filtre à air bouché par le givre perturbe et fait chuter le débit d'air qui le traverse jusqu'à empêcher complètement le passage du flux d'air. Le filtre à air se bouche complètement et le système de ventilation ne fonctionne alors plus.

Un art antérieur prévoit un jeu de deux filtres permettant de dégivrer un filtre pendant que l'autre est en fonctionnement. Un inconvénient est le caractère extrêmement fastidieux de l'entretien de ce type d'installation.

Un autre art antérieur prévoit des moyens de chauffage afin de chauffer l'air avant la traversée du filtre à air. Les moyens de chauffage ont l'inconvénient de nécessiter une source d'énergie.

L'invention repose sur le principe consistant à générer un phénomène de givrage à l'aide de moyens d'assèchement passif d'air tout en conservant au cours du phénomène de givrage un passage d'air qui reste libre. Ce passage d'air permet au filtre à air de continuer à fonctionner dans des conditions de brouillard givrant avec un faible entretien extensif. Ce phénomène de givrage est généré au niveau d'un dispositif anti-givrage lequel protège alors du givrage le filtre à air. Le phénomène de givrage est provoqué par une détente de l'air humide entraînant une baisse de température.

Selon l'invention il est prévu un dispositif anti-givrage pour filtre à air, caractérisé en ce que le dispositif comporte des moyens d'assèchement passif d'air par génération d'un phénomène de givrage, lesdits moyens comportant au moins un passage d'air en forme de chicane qui reste libre au cours du phénomène de givrage. Les moyens d'assèchement ne comportent donc pas de source d'énergie et ne nécessitent qu'un entretien extensif et peu coûteux.

Les moyens d'assèchement passif d'air sont de préférence des moyens d'assèchement statique d'air. Les moyens d'assèchement statique comportent des pièces immobiles et non consommables. Les moyens d'assèchement statique n'ont donc pas besoin d'être remplacés régulièrement comme par exemple des pains de sel hydrofuge qui fondent au cours de leur utilisation. Le dispositif anti-givrage possède alors une grande fiabilité d'utilisation et ne nécessite qu'un entretien minimum.

L'invention sera mieux comprise et d'autres caractéristiques et avantages apparaîtront à l'aide de la description ci-après et des dessins joints, donnés à titre d'exemples non limitatifs, où :
- la figure 1 représente schématiquement un dispositif anti-givrage selon l'invention situé dans un châssis intégré dans un système de ventilation ;
- la figure 2 représente schématiquement la chute de pression au niveau du dispositif anti-givrage en fonction du taux de perforation des plaques perforées d'un dispositif anti-givrage selon un mode préférentiel de réalisation de l'invention.

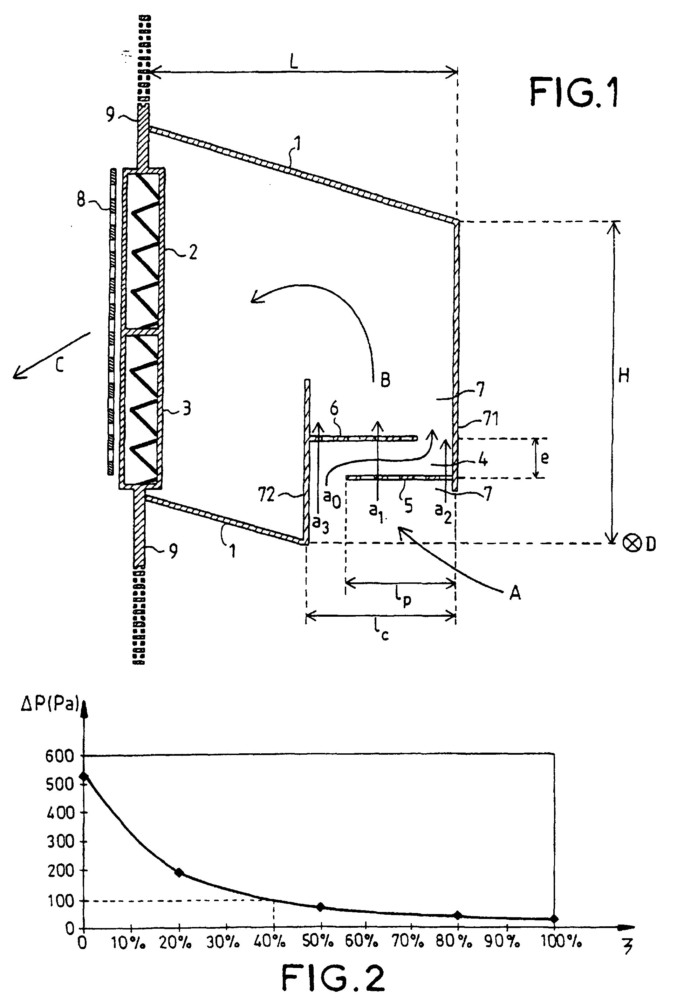

La figure 1 représente un mode de réalisation préférentiel d'un dispositif anti-givrage selon l'invention. La figure 1 représentée est une section d'un dispositif anti-givrage selon l'invention. Les moyens 4, 5 et 6 d'assèchement statique d'air par génération d'un phénomène de givrage comportent des plaques perforées permettant la génération d'un phénomène de détente d'air humide entraînant une baisse de température. Cette baisse de température est à l'origine d'un phénomène de givrage dans des conditions de brouillard givrant. Ce phénomène de givrage débarrasse d'au moins une partie de son humidité l'air traversant les moyens 4, 5 et 6 d'assèchement statique. Les moyens 4, 5 et 6 d'assèchement statique comportent au moins deux plaques perforées 5 et 6 espacées l'une de l'autre par un passage 4 d'air. Le passage 4 d'air en forme de chicane reste libre au cours du phénomène de givrage appelé plus simplement givrage, même lorsque les trous que contiennent les plaques perforées 5 et 6 sont bouchés par le givre. La forme en chicane du passage 4 d'air permet d'assécher l'air qui traverse les moyens 4, 5 et 6 d'assèchement tout en maintenant un passage libre et donc une chute de pression limitée au niveau du dispositif anti-givrage au cours du givrage. Les trous des plaques perforées 5 et 6 permettent un amorçage plus rapide du phénomène de givrage lorsque les trous sont libres. Lorsque les trous sont bouchés, la couche de givre recouvrant les plaques est plus importante qu'en l'absence de trous ; par conséquent l'assèchement de l'air traversant les moyens d'assèchement qui s'effectue par léchage des plaques perforées 5 et 6 est plus important. Les plaques perforées sont de préférence au nombre de deux. En effet, trois ou même plus de plaques perforées augmentent faiblement l'efficacité d'assèchement mais rendent par contre le dispositif anti-givrage plus complexe.

Le dispositif anti-givrage comporte de préférence un couloir 7 par exemple de section rectangulaire dont deux parois opposées 71 et 72 sont représentées. Dans ce couloir 7, les deux plaques perforées 5 et 6 sont disposées en quinconce, de manière à ce que l'air circulant dans le couloir 7, soit traverse au moins l'une des plaques 5 ou 6, soit passe entre les surfaces des deux plaques 5 et 6 par l'intermédiaire du passage 4 d'air en forme de chicane. Pour cela, la plaque perforée 5 est reliée à la paroi 71 tandis que la plaque perforée 6 est reliée à la paroi 72. Le flux d'air arrivant en amont des moyens 4, 5 et 6 d'assèchement est noté A et le flux d'air repartant en aval des moyens 4, 5 et 6 d'assèchement est noté B. Au niveau des moyens 4, 5 et 6 d'assèchement, le flux d'air A peut emprunter plusieurs chemins pour traverser les moyens 4, 5 et 6 d'assèchement. Les différents types de chemins possibles sont matérialisés par les flux d'air a₀, a₁, a₂ et a₃. Le flux d'air a₁ passe successivement au travers des plaques perforées 5 et 6. Le flux d'air a₂ passe d'abord au travers de la plaque perforée 5 puis à côté de la plaque perforée 6. Le flux d'air a₃ passe d'abord à côté de la plaque perforée 5 puis au travers de la plaque perforée 6. Le flux d'air a₀, qui suit le passage 4 d'air en forme de chicane, passe d'abord à côté de la plaque perforée 5 puis entre les surfaces des plaques perforées 5 et 6 et enfin à côté de la plaque 6. Les flux d'air a₀, a₁, a₂ et a₃ sont débarrassés d'une partie de leur humidité sous forme de dépôt de givre sur les plaques perforées 5 et 6. Pour les flux d'air a₁, a₂ et a₃, le phénomène de givrage est provoqué par une détente d'air entraînant une baisse de température lors de la traversée des plaques perforées 5 et 6. Pour le flux d'air a₀, le phénomène de givrage est provoqué par le léchage des surfaces des plaques perforées 5 et 6 elles-mêmes déjà froides et ensuite recouvertes de givre.

Les plaques perforées 5 et 6 sont préférentiellement respectivement sensiblement perpendiculaires aux parois 71 et 72 du couloir 7. Des angles entre plaque perforée et paroi qui sont différents de l'angle droit augmentent l'encombrement du dispositif anti-givrage sans en augmenter l'efficacité d'assèchement.

Soit Ic la largeur du couloir et Ip la largeur des plaques perforées 5 et 6, la largeur Ip étant avantageusement identique pour les deux plaques perforées 5 et 6. Soit e l'espacement interplaques, c'est-à-dire l'espacement qui sépare les surfaces des plaques perforées 5 et 6. De préférence, la largeur Ip de chacune des plaques perforées 5 et 6 vaut sensiblement les trois quarts de la largeur Ic du couloir 7 et l'espacement interplaques e vaut sensiblement le quart de la largeur Ic du couloir 7, les valeurs exactes de trois quarts et de un quart respectivement pour les rapports Ip/Ic et e/Ic représentant des optimums. Dans ce cas, les plaques s'étendent sur toute la longueur du couloir 7, dans la direction D. Un exemple numérique préférentiel selon l'invention décrit ci-dessous correspond à sensiblement 300 mm pour la largeur Ip, sensiblement 400 mm pour la largeur Ic, et sensiblement 100 mm pour l'espacement interplaques e.

Les plaques perforées 5 et 6 sont de préférence sensiblement planes. Les plaques perforées 5 et 6 sont avantageusement des tôles métalliques. Le métal assure une bonne conductibilité thermique. L'utilisation d'un métal pour réaliser le dispositif anti-givrage, lorsque le reste de la structure auquel il se rattache est également en métal, permet également d'éviter l'apparition de problèmes galvanomètriques entraînant une corrosion par oxydation. Le métal est par exemple de l'aluminium.

La figure 1 montre également un châssis 1 comportant le couloir 7 dans lequel les moyens 4, 5 et 6 d'assèchement peuvent être intégrés. Le châssis 1 est un châssis de protection mécanique pour filtre à air comportant un dispositif anti-givrage selon l'invention situé au niveau de l'entrée d'air du châssis 1. L'entrée d'air du châssis 1 est située au niveau du couloir 7. Le châssis 1 permet par exemple de protéger un filtre à air des gouttes de pluie, que celles-ci viennent d'en haut lors de leur chute ou d'en bas par rebond sur un sol dur. Le châssis 1 est préférentiellement démontable et fixable par vis sur un support 9. Les plaques perforées 5 et 6 sont elles-mêmes avantageusement fixables par vis dans le couloir 7. Le caractère démontable des plaques perforées 5 et 6 et le cas échéant du châssis 1 permet une utilisation limitée dans le temps du dispositif anti-givrage, c'est-à-dire que le dispositif anti-givrage peut être démonter en été par exemple. Dans l'exemple numérique préférentiel décrit ci-dessous, les dimensions LxHxD du châssis 1 valent de préférence 800×800×600 mm. Le châssis 1 peut être placé à des distances proches du sol, par exemple 20 cm.

La figure 1 montre également une partie d'un système de ventilation comportant deux filtres à air 2 et 3. Une grille 8 anti-IEM, IEM pour impulsion électromagnétique, est avantageusement placée en aval des filtres à air 2 et 3. Le flux d'air B est le flux en amont des filtres à air 2 et 3 tandis que flux d'air C est le flux en aval des filtres à air 2 et 3. Le système de ventilation comporte au moins un filtre à air, et la chute ΔPd de pression relative au niveau du dispositif anti-givrage est de préférence sensiblement égale ou supérieure à la chute ΔPf de pression relative au niveau du ou des filtres à air. En effet, cette condition permet au dispositif anti-givrage de débarrasser le flux d'air A de son excès d'humidité qui aurait givrer sur les filtres à air 2 et 3. Ainsi le flux d'air B peut contenir de l'humidité, mais celle-ci n'étant plus en excès, elle ne provoquera plus ou presque plus de givrage lors de la détente suivie de refroidissement subis par le flux d'air au moment du passage des filtres à air 2 et 3. Plus la chute de pression ΔPd sera inférieure à la chute de pression ΔPf, moins l'efficacité d'assèchement de l'air au niveau du dispositif anti-givrage sera bonne. Si la chute de pression ΔPd devient trop supérieure à la chute de pression ΔPf, il se produit un effondrement de pression au niveau du flux d'air B pouvant perturber le fonctionnement du filtre à air.

Les plaques perforées 5 et 6 ont des trous et le rapport entre la surface totale des trous contenus dans une plaque perforée et la surface totale de la plaque perforée est appelé taux de perforation ξ. La figure 2 représente la chute ΔP de pression absolue au niveau du dispositif anti-givrage en fonction du taux de perforation ξ des plaques perforées 5 et 6. La chute de pression absolue ΔP est exprimée en Pascals (Pa) et le taux de perforation ξ en pour-cent (%). De préférence, le taux de perforation ξ des plaques est compris entre 30% et 50%. Dans l'exemple numérique préférentiel décrit ci-dessous, le taux de perforation ξ vaut 40%, correspondant à une chute de pression absolue ΔP de 100 Pa, la chute ΔPd de pression relative au niveau du dispositif anti-givrage correspondant alors sensiblement à la chute ΔPf de pression relative au niveau des filtres à air 2 et 3 utilisés. Un taux de perforation ξ de 100%, c'est-à-dire l'absence de plaques perforées, révèle une chute de pression faible de l'ordre de 30 Pa qui provient de la présence du châssis 1. Du taux de perforation ξ dépend principalement la chute de pression ΔPd. Selon le filtre à air utilisé et par conséquent selon la chute de pression ΔPd cherchée, un taux de perforation ξ adéquat peut être choisi. Au premier ordre, la taille des trous, pour un taux de perforation ξ donné, n'intervient pas, c'est-à-dire que le fait que le taux de perforation ξ soit obtenu avec beaucoup de petits trous ou avec peu de grands trous est en première approximation indifférent. Néanmoins, afin d'obtenir un amorçage rapide du phénomène de givrage au niveau des moyens 4, 5 et 6 d'assèchement, les plaques perforées 5 et 6 comporteront préférentiellement des petits trous lesquels réalisent un piégeage plus efficace de l'humidité au début du phénomène de givrage. Dans l'exemple numérique préférentiel décrit ci-dessous, le diamètre des trous vaut sensiblement 10 mm.

L'exemple numérique préférentiel signalé ci-dessus correspond à l'utilisation d'un dispositif anti-givrage dans un châssis protégeant deux filtres à air d'un système de ventilation d'un « abri » (shelter en anglais) pour station radar mobile utilisée dans des conditions de brouillard givrant. Le débit d'air d'un tel système de ventilation est de l'ordre de quelques milliers de mètres cube par heure (m³/h). Un système actif utilisant une source d'énergie devant réchauffant l'air d'environ à 2°C, aurait nécessité la révision complète du bilan de puissance au niveau de la station radar, pouvant entraîner une modification du câblage à l'intérieur du shelter. Le dispositif anti-givrage selon l'invention est donc particulièrement intéressant pour les systèmes de ventilation à débit d'air élevé.

Des tests ont été effectués dans des conditions de brouillard givrant avec trois équipements : le premier équipement ne comportait ni châssis de protection mécanique, ni dispositif anti-givrage, le deuxième équipement comportait un châssis de protection mécanique mais pas de dispositif anti-givrage, le troisième équipement comportait châssis de protection mécanique et dispositif anti-givrage.

Au bout d'une heure, le poids de givre a été relevé sur les filtres à air supérieur 2 et inférieur 3, et les résultats obtenus ont été les suivants :
- pour le premier équipement, près d'un kilogramme de givre sur chacun des filtres avec une dégradation du débit d'air qui a chuté d'environ 15% ;
- pour le deuxième équipement, près de trois kilogrammes de givre sur le filtre supérieur 2 avec un débit d'air quasi nul et près d'un kilogramme de givre sur le filtre inférieur 3 avec une dégradation du débit d'air qui a chuté d'environ 15% ;
- pour le troisième équipement, moins de cent grammes de givre sur chacun des filtres avec aucune dégradation sensible du débit d'air.

Ces résultats établissent l'efficacité du dispositif anti-givrage selon l'invention, d'autant plus que la présence d'un châssis de protection mécanique sur le système de ventilation dégrade encore plus un débit d'air déjà affecté en l'absence de châssis.

## Revendications

1. Dispositif anti-givrage pour filtre à air, **caractérisé en ce que** le dispositif comporte des moyens (4, 5, 6) d'assèchement passif d'air par génération d'un phénomène de givrage, lesdits moyens (4, 5, 6) comportant au moins un passage (4) d'air en forme de chicane qui reste libre au cours du phénomène de givrage.

2. Dispositif selon la revendication 1, **caractérisé en ce que** les moyens (4, 5, 6) d'assèchement passif d'air sont des moyens (4, 5, 6) d'assèchement statique d'air.

3. Dispositif selon la revendication 2, **caractérisé en ce que** les moyens (4, 5, 6) d'assèchement comportent au moins deux plaques perforées (5, 6) espacées l'une de l'autre par le passage (4) d'air.

4. Dispositif selon la revendication 3, **caractérisé en ce que** le dispositif comporte un couloir (7) dans lequel deux au moins des plaques perforées (5, 6) sont disposées en quinconce de manière à ce que l'air (a₀, a₁, a₂, a₃) circulant dans le couloir (7), soit traverse au moins l'une des plaques perforées (5, 6), soit passe entre les surfaces des deux plaques perforées (5, 6) par l'intermédiaire du passage (4) d'air.

5. Dispositif selon la revendication 4, **caractérisé en ce que** les plaques perforées (5, 6) sont sensiblement perpendiculaires aux parois (71, 72) du couloir (7).

6. Dispositif selon la revendication 5, **caractérisé en ce que** la largeur (Ip) de chacune des plaques perforées (5, 6) vaut sensiblement les trois quarts de la largeur (Ic) du couloir (7) et **en ce que** l'espacement interplaques (e) vaut sensiblement le quart de la largeur (Ic) du couloir (7).

7. Dispositif selon la revendication 6, **caractérisé en ce que** l'espacement interplaques (e) vaut sensiblement 100 mm.

8. Dispositif selon l'une quelconque des revendications 3 à 7, **caractérisé en ce que** le taux de perforation (ξ) des plaques perforées (5, 6) est compris entre 30% et 50%.

9. Dispositif selon l'une quelconque des revendications 3 à 8, **caractérisé en ce que** les plaques perforées (5, 6) sont sensiblement planes.

10. Dispositif selon l'une quelconque des revendications 3 à 9, **caractérisé en ce que** les plaques perforées (5, 6) sont des tôles métalliques.

11. Châssis de protection mécanique pour filtre à air **caractérisé en ce que** le châssis (1) comporte un dispositif anti-givrage selon l'une quelconque des revendications précédentes et **en ce que** le dispositif anti-givrage est situé au niveau de l'entrée d'air du châssis (1).

12. Système de ventilation comportant au moins un filtre (2, 3) à air **caractérisé en ce que** le système comporte un dispositif anti-givrage selon l'une quelconque des revendications 1 à 10 ou un châssis (1) selon la revendication 11, et **en ce que** la chute (ΔPd) de pression relative au niveau du dispositif anti-givrage est sensiblement égale ou supérieure à la chute (ΔPf) de pression relative au niveau du filtre (2, 3).

## Patentansprüche

1. Antivereisungsvorrichtung für Luftfilter, **dadurch gekennzeichnet, daß** die Vorrichtung Mittel (4, 5, 6) zur passiven Luftaustrocknung durch Erzeugung eines Vereisungsphänomens aufweist, wobei die Mittel (4, 5, 6) wenigstens einen Luftdurchgang (4) in Form einer Schikane aufweisen, die im Verlauf des Vereisungsphänomens frei bleibt.

2. Vorrichtung nach Anspruch 1, **dadurch gekennzeichnet, daß** die Mittel (4, 5, 6) zur passiven Luftaustrocknung Mittel (4, 5, 6) zur statischen Luftaustrocknung sind.

3. Vorrichtung nach Anspruch 2, **dadurch gekennzeichnet, daß** die Austrocknungsmittel (4, 5, 6) wenigstens zwei perforierte Platten (5, 6) aufweisen, die durch den Luftdurchgang (4) voneinander beabstandet sind.

4. Vorrichtung nach Anspruch 3, **dadurch gekennzeichnet, daß** die Vorrichtung einen Gang (7) aufweist, in welchem wenigstens zwei der perforierten Platten (5, 6) derart versetzt angeordnet sind, daß die in dem Gang (7) zirkulierende Luft (a₀, a₁, a₂, a₃) entweder wenigstens eine der perforierten Platten (5, 6) durchquert oder über den Luftdurchgang (4) zwischen den Oberflächen der zwei perforierten Platten (5, 6) strömt.

5. Vorrichtung nach Anspruch 4, **dadurch gekennzeichnet, daß** die perforierten Platten (5, 6) im wesentlichen senkrecht zu den Wänden (71, 72) des Gangs (7) sind.

6. Vorrichtung nach Anspruch 5, **dadurch gekennzeichnet, daß** die Breite (lp) jeder der perforierten Platten (5, 6) im wesentlichen drei Viertel der Breite (Lc) des Gangs (7) beträgt, und daß der Zwischenplattenabstand (e) im wesentlichen ein Viertel der Breite (lc) des Gangs (7) beträgt.

7. Vorrichtung nach Anspruch 6, **dadurch gekennzeichnet, daß** der Zwischenplattenabstand (e) im wesentlichen 100 mm beträgt.

8. Vorrichtung nach einem der Ansprüche 3 bis 7, **dadurch gekennzeichnet, daß** die Perforationsrate (ξ) der perforierten Platten (5, 6) zwischen 30 % und 50 % liegt.

9. Vorrichtung nach einem der Ansprüche 3 bis 8, **dadurch gekennzeichnet, daß** die perforierten Platten (5, 6) im wesentlichen flach sind.

10. Vorrichtung nach einem der Ansprüche 3 bis 9, **dadurch gekennzeichnet, daß** die perforierten Platten (5, 6) Metallbleche sind.

11. Mechanischer Schutzkasten für einen Luftfilter, **dadurch gekennzeichnet, daß** der Kasten (1) eine Antivereisungsvorrichtung nach einem der vorhergehenden Ansprüche aufweist, und daß die Antivereisungsvorrichtung auf Höhe des Lufteingangs des Kastens (1) liegt.

12. Ventilationssystem, das wenigstens einen Luftfilter (2, 3) aufweist, **dadurch gekennzeichnet, daß** das System eine Antivereisungsvorrichtung nach einem der Ansprüche 1 bis 10 oder einen Kasten (1) nach Anspruch 11 aufweist, und daß der relative Druckabfall (ΔPd) auf Höhe der Antivereisungsvorrichtung im wesentlichen größer oder gleich dem relativen Druckabfall (ΔPf) auf Höhe des Filters (2, 3) ist.

## Claims

1. Anti-frost device for an air filter, **characterized in that** the device includes a passive air drying means (4, 5, 6) that dries by generating a frosting phenomenon, said means (4, 5, 6) having at least one air passage (4) in the form of a baffle that remains clear during the frosting phenomenon.

2. Device according to Claim 1, **characterized in that** the passive air drying means (4, 5, 6) are static air drying means (4, 5, 6).

3. Device according to Claim 2, **characterized in that** the drying means (4, 5, 6) comprise at least two perforated plates (5, 6) spaced apart by the air passage (4).

4. Device according to Claim 3, **characterized in that** the device includes a duct (7) in which at least two of the perforated plates (5, 6) are placed in a staggered fashion so that the air (a₀, a₁, a₂, a₃) flowing in the duct (7) either passes through at least one of the perforated plates (5, 6) or passes between the surfaces of the two perforated plates (5, 6) via the air passage (4).

5. Device according to Claim 4, **characterized in that** the perforated plates (5, 6) are approximately perpendicular to the walls (71, 72) of the duct (7).

6. Device according to Claim 5, **characterized in that** the width (lₚ) of each of the perforated plates (5, 6) is approximately three quarters of the width (l_{d}) of the duct (7) and **in that** the interplate spacing (s) is approximately one quarter of the width (l_{d}) of the duct (7).

7. Device according to Claim 6, **characterized in that** the interplate spacing (s) is approximately 100 mm.

8. Device according to any one of Claims 3 to 7, **characterized in that** the degree of perforation (ξ) of the perforated plates (5, 6) is between 30% and 50%.

9. Device according to any one of Claims 3 to 8, **characterized in that** the perforated plates (5, 6) are substantially plane.

10. Device according to any one of Claims 3 to 9, **characterized in that** the perforated plates (5, 6) are metal plates.

11. Structure for mechanical protection of an air filter, **characterized in that** the structure (1) includes an anti-frost device according to any one of the preceding claims and **in that** the anti-frost device is located at the air inlet of the structure (1).

12. Ventilation system comprising at least one air filter (2, 3), **characterized in that** the system includes an anti-frost device according to any one of Claims 1 to 10 or a structure (1) according to Claim 11, and **in that** the relative pressure drop (ΔP_{d}) through the anti-frost device is substantially equal to or greater than the relative pressure drop (ΔP_{f}) through the filter (2, 3).
